# EUROPÄISCHE PATENTSCHRIFT

(11) **EP 1 485 533 B1**
(45) Veröffentlichungstag und Bekanntmachung des Hinweises auf die Patenterteilung: **16.07.2008**
(21) Anmeldenummer: 03714822.8
(22) Anmeldetag: 13.03.2003
(51) Int. Cl.: D06M 15/564, D06M 13/02, D06M 15/227, D06M 13/395, C08G 18/00

(54) **ZUBEREITUNGEN AUF BASIS VON WASSER UND/ODER ORGANISCHEN LÖSEMITTELN UND DEREN ANWENDUNG ALS APPRETUR AUF FLÄCHENGEBILDEN**
PREPARATIONS BASED ON WATER AND/OR ORGANIC SOLVENTS AND USE THEREOF AS COATING ON TEXTILE FABRICS
PREPARATIONS A BASE D'EAU ET/OU DE SOLVANTS ORGANIQUES ET LEUR UTILISATION COMME APPRET SUR DES PRODUITS PLATS

(30) Priorität: 15.03.2002 DE 10211549
(43) Veröffentlichungstag der Anmeldung: 15.12.2004
(73) Patentinhaber: Rudolf GmbH & Co. KG Chemische Fabrik, 82538 Geretsried (DE)
(72) Erfinder: SANDNER, Bernhard, 82538 Geretsried (DE); WILFLING, Alfred, 82538 Geretsried (DE); DUSCHEK, Gunther, 83671 Benediktbeuren (DE)
(74) Vertreter: Pfenning, Meinig & Partner GbR
(86) Internationale Anmeldenummer: PCT/EP2003/002639
(87) Internationale Veröffentlichungsnummer: WO 2003/078725

(56) Entgegenhaltungen:
- EP-A- 0 429 983
- EP-A- 0 872 503
- WO-A-99/14422
- DE-B- 1 017 133

## Beschreibung

Die Erfindung betrifft Zubereitungen auf Basis von Wasser und/oder organischen Lösemitteln und deren Anwendung als Appretur auf Flächengebilden.

Es ist bekannt, dass zum Appretieren von Flächengebilden Zubereitungen auf wässriger Basis oder Lösemittelbasis aus Silikonölen, Paraffinen, Fluorcarbonpolymeren (Fluorcarbon wird im folgenden mit FC abgekürzt) und anderen Additiven verwendet werden, welche dem appretierten Flächengebilde besondere hydrophobe Effekte verleihen, um den Beanspruchungen gegenüber Regen, Spritzwasser oder Feuchtigkeit aus anderen Quellen während des Gebrauchs des Flächengebildes gerecht zu werden. So werden beispielsweise Zeltgewebe mit wässrigen Emulsionen aus Paraffinen, Metallseifen sowie Kieselsäuresalzen polyvalenter Metalle behandelt, um die textile Oberfläche undurchlässig gegenüber Regen oder Spritzwasser zu machen. Derartige Zubereitungen werden auch zur Behandlung von Papier eingesetzt, ebenfalls um die hydrophoben Eigenschaften zu verbessern. Aus der deutschen Auslegeschrift DE-AS 1001965 ist bekannt, Reaktionsprodukte aus basischen Metallsalzen von höhermolekularen Fettsäuren oder Harzsäuren und niedrigmolekularen Di- oder Polyisocyanaten zum Trockenhydrophobieren von Textilien zu verwenden.

All diesen bekannten Anwendungen ist gemein, dass die Flächengebilde nach ihrer Behandlung mit den genannten Chemikalien nicht gewaschen oder durch andere Reinigungsmaßnahmen von allfälligen Verschmutzungen befreit werden können. Sofern jedoch substratabhängig Reinigungsprozesse notwendig sind, ist dabei stets eine drastische Verschlechterung der wasserabweisenden Eigenschaften festzustellen. Durch Auffrischung der Hydrophobie mittels Nachbehandlung mit geeigneten Hydrophobiermitteln kann dieser Nachteil teilweise ausgeglichen werden, wobei meist Chemikalien auf gleicher oder ähnlicher chemischer Basis wie bei der Erstappretur Verwendung finden.

Moderne Gewebe finden vielfältige Anwendung bei Sport- und Freizeitbekleidung, aber auch für Artikel im militärischen oder Feuerwehrbereich oder für sonstige Schutzbekleidung. Derartige Artikel verschmutzen insbesondere bei intensiver Nutzung sehr rasch und werden daher häufig gewaschen. Dies geschieht üblicherweise unter Verwendung von Waschmitteln auf Industrie- oder Haushaltswaschmaschinen oder durch eine Handwäsche. Bei allen Waschprozessen erfolgt neben einer Benetzung des Flächengebildes durch die eingesetzten Detergentien eine mehr oder weniger starke mechanische Beanspruchung durch Walken, Wringen und Stauchen. Durch die gemeinsame Einwirkung von Waschmittel und mechanischen Kräften werden die aufgebrachten Appreturen zum größten Teil von den Flächengebilden abgelöst und die Substrate besitzen nach dem Trocknen nur mehr mäßige oder gar keine Wasserabweisung. Eine Wiederauffrischung der Hydrophobie durch Aufsprühen oder Auftragen in der Waschmaschine oder ähnliche Applikationsmethoden gelingt mit den derzeit marktüblichen Imprägnierungsprodukten nicht in zufriedenstellendem Umfang, weil zur Erzielung einer guten Hydrophobie die behandelte Fläche nach dem Trocknen über den Schmelzpunkt der verwendeten Wachse erhitzt werden müsste, um Koaleszenz der Wachspartikel und damit einen kontinuierlichen, optimal hydrophoben Wachsfilm zu erzeugen.

Bei den genannten Artikeln ist daher Voraussetzung, dass neben einer guten Anfangshydrophobie auch eine Beständigkeit der Appretur gegenüber mehrfachen Wäschen gegeben ist. Es wurden deshalb schon frühzeitig Zubereitungen entwickelt, welche die ungenügende Beständigkeit gegenüber Waschprozessen verbessern sollten. So werden in der DE-B 1 017 133 Hydrophobiermittel beschrieben, welche durch Mischung eines Kondensationsproduktes aus Hexamethylolmelaminhexamethylether, Stearinsäure, Stearinsäurediglycerid und Triethanolamin mit Paraffin herzustellen sind. Die so erhaltenen schuppen- oder brockenartigen Produkte werden vor der Anwendung durch Aufschmelzen mit heißem Wasser oder Dampf und unter Zusatz von Essigsäure in eine aus wässrigen Flotten heraus applizierfähige Emulsionsform gebracht.

Bei den damit ausgerüsteten Flächengebilden und Fasermaterialien hat sich allerdings als nachteilig herausgestellt, dass durch die relativ hohe Aufbringungsmenge, den chemischen Charakter der Zubereitung und insbesondere durch die Vernetzung der fettsäuremodifizierten Methyloltriazinverbindung mit sich selbst sowie den funktionellen Gruppen von Substraten auf nativer Basis eine deutliche Verhärtung des Griffcharakters einherging. Aufgrund dieser Reaktionscharakteristik ist eine Beständigkeit gegenüber Mehrfachwäschen zwar bei den cellulosischen Substraten, wie z.B. Baumwolle oder Viskose gegeben, jedoch auf leichten, textilen Materialien aus synthetischen Fasern, wie sie für die Ausrüstung von Sport- und Freizeitartikeln bevorzugt Verwendung finden, kann aber wegen der Fasermorphologie sowie der weitgehenden Abwesenheit funktioneller Gruppen eine Vernetzungsreaktion nicht im selben Ausmaß wie bei cellulosischen Artikeln stattfinden, weshalb die Waschpermanenzen ungenügend sind. Zudem wird die Griffverhärtung als unnatürlich empfunden und daher finden solchermaßen ausgerüstete Textilien beim Verbraucher keine Akzeptanz.

Ein weiterer, wesentlicher Nachteil der beschriebenen Appretur hat sich bei der Anwendung dieser Produkte in der Praxis insofern gezeigt, dass die Zubereitungen im Veredelungsbetrieb erst unmittelbar vor der Anwendung aus der wasserfreien, 100%igen Schmelze hergestellt werden müssen. Dies ist notwendig, weil aufgrund der hohen Reaktivität der Methylolaminotriazinverbindung in den stark essigsauren, wässrigen Emulsionen eine Vernetzung innerhalb des Emulsionspartikels stattfinden kann, welche einerseits die Reaktivität mit dem textilen Substrat herabsetzt, andererseits zu Vernetzungen und Agglomerationen zwischen den Emulsionspartikeln und damit zu extremen Viskositätserhöhungen führt. Aus dem selben Grunde verliert die Zubereitung in wasserfreier Schuppen-, Block- oder Prillform, also bereits vor dem Emulgierschritt, nach längerer Lagerung ihre Hydrophobeffekte und ist zunehmend schwieriger oder gar nicht mehr zu emulgieren. Die wässrigen Emulsionen haben ebenfalls nur begrenzte Haltbarkeit und müssen rasch aufgebraucht werden, bevor die Reaktivität unzulässig reduziert ist. Aufgrund dieses Verhaltens sind alterungsbeständige Emulsionen der beschriebenen Zusammensetzung trotz des insgesamt positiven Waschpermanenzprofils bis anhin nicht bekannt.

Nachteilig ist bei derartigen Zubereitungen außerdem die umständliche Herstellungsweise der Emulsion aus den Schuppen. Dies stellt unter den heutigen Bedingungen in textilen Veredelungsbetrieben mit häufig ungeschultem Personal einen Unsicherheitsfaktor dar, welcher nicht akzeptiert wird. Zudem treten während der Applikation zwangsläufig Emissionen von Formaldehyd aus der Methylolaminotriazinverbindung sowie von Essigsäure auf, welche unter heutigen Ökologiestandards Schwierigkeiten wegen der Nichteinhaltung der Emissionsgrenzwerte verursachen können.

Auf den modernen Geweben, insbesondere auf solchen aus synthetischen Materialien, lässt sich die beschriebene Aufgabe durch die Verwendung von FC-Polymeren auf wässriger oder Lösemittelbasis in besserer Weise lösen. So beschreibt beispielsweise die EP 0 325 918 B1 Zubereitungen, welche aus modifizierten, perfluoraliphatische Gruppen enthaltenden Polyurethanen bestehen und mit welchen gute Öl- und Wasserabweisung auf textilen Substraten bei gleichzeitig gutem Weichgriff sowie befriedigender Waschbeständigkeit erzielt werden kann. In der EP 314 944-A- werden Formulierungen von FC-Polymeren unter Mitverwendung von Polyethylen und modifizierten Polysiloxanen empfohlen, bei welchen ein besonders oberflächenglatter, weicher Griff hervorgehoben wird.

WO 00/29663 A2 beschreibt Zubereitungen für die permanente Faserausrüstung, die Umsetzungsprodukte von polyisocyanatfunktionellen Verbindungen mit silikonfreien und/oder silikonhaltigen Weichgriffmitteln enthalten und ausweislich der Beispiele bevorzugt einen hydrophilierenden Rest aufweisen.

Aufgrund der mit FC-Formulierungen zu erreichenden Waschbeständigkeiten von Hydrophob- und Oleophobeffekten bei gleichzeitig gutem Warengriff werden heute derartige Verbindungen insbesondere für die Anwendung auf synthetischen Flächengebilden als geeignete Produkte für das zu erreichende Ziel betrachtet. Nachteilig ist bei den Zubereitungen auf FC-Polymerbasis der relativ hohe Preis, welcher durch zahlreiche, teilweise energieaufwändige Synthesestufen bedingt ist. Aufgrund neuester Untersuchungen können zudem bei den durch Elektrofluorierung hergestellten FC-Polymeren in kleinem Umfange Nebenprodukte enthalten sein, deren ökotoxikologische Eigenschaften noch nicht ausreichend untersucht sind. Obwohl in den marktdominanten, durch Telomerisation hergestellten FC-Polymeren derartige Nebenprodukte nicht enthalten sind, ist eine negative Sensibilisierung der Öffentlichkeit gegenüber der gesamten Gruppe der FC-Polymeren nicht auszuschließen. Die WO 99/14422 A1 beschreibt Zubereitungen für Fasermaterialien, die neben obligatorischen FC-Verbindungen das Kondensationsprodukt eines Polyisocyanates mit einem Diol und einem Isocyanatblockierungsmittels enthalten. Dieses Kondensationsprodukt ist strukturell von der anspruchsgemäßen Komponente (2) verschieden.

Trotz des insgesamt guten Gesamteffektniveaus der FC-Polymere ist zu erwähnen, dass nach Waschprozessen sowohl Hydrophob- als auch Oleophobwirkung aufgrund der Desorientierung der aktiven FC-Reste an den Polymermolekülen stark reduziert wird, sofern nicht durch thermische Behandlung eine Reorientierung stattfinden kann. Dies bedeutet, dass solcherart behandelte Flächengebilde nach einer Wäsche einer Hitzebehandlung bedürfen, um die gewünschten Effekte zu revitalisieren. So ist beispielsweise ein Bügeln oder mindestens ein Trocknen im Tumbler bei Temperaturen >80°C Voraussetzung für gute Phobiereigenschaften.

Es war daher Aufgabe der vorliegenden Erfindung, eine Zubereitung herzustellen, welche auf Flächengebilden optimale Hydrophobeigenschaften mit guter Waschbeständigkeit bei nur geringer Griffverhärtung aufweist und kommerzielle Vorteile gegenüber der den Stand der Technik darstellenden Ausrüstung mit FC-Polymeren bietet. Gleichzeitig, sollte die Zubereitung lagerstabil sein und möglichst wenig emissionsfähige Bestandteile, insbesondere keinen latent abspaltbaren Formaldehyd enthalten. Außerdem sollte die Zubereitung unter Anwendungsbedingungen kompatibel mit anderen Zubereitungen des Standes der Technik, wie z.B. den FC-Polymeren oder den in Verbindung mit FC-Polymeren häufig zur Anwendung gelangenden Boostem auf Basis blockierter Polyisocyanate sein.

Des weiteren wurde an die zu entwickelnde Zubereitung die Aufgabe gestellt, auf Flächengebilden durch Nachbehandlung mit der Zubereitung eine durch Mehrfachwäschen nachlassende Hydro- und gegebenenfalls Oleophobierwirkung wieder ganz oder teilweise zu regenerieren.

Überraschenderweise konnte die Aufgabe durch die Verwendung einer Zubereitung gelöst werden, welche neben den aus dem Stand der Technik bekannten Wachskomponenten verschiedenster Provenienz eine neuartige Komponente (2), gegebenenfalls ein mit einer Schutzgruppe blockiertes Polyisocyanat sowie bei wässrigen Zubereitungen die zur Emulgierung essentiellen Emulgatoren enthalten. Die so erhaltenen Zubereitungen zeichnen sich durch überlegene Hydrophobiereigenschaften mit hoher Waschpermanenz aus, wobei die Emulsionen auf wässriger Basis keine Neigung zu vorzeitiger Vernetzung und damit einhergehender Viskositätszunahme der Emulsion zeigen. Bei Mitverwendung geeigneter FC-Polymerer in der Anwendungsflotte ist zusätzlich zu guten Hydrophobeigenschaften eine gute Öl- und Schmutzabweisung zu erzielen.

Der erste Gegenstand der Erfindung sind nun Zubereitungen (Z) auf Basis von Wasser und/oder organischen Lösemitteln, gekennzeichnet durch den Gehalt folgender Einzelkomponenten:
(1) 10-90% einer hydrophoben Komponente auf Wachsbasis,
(2) 10-90% eines hydrophoben Umsetzungsproduktes (S), erhältlich durch Umsetzen einer Komponente (A) der 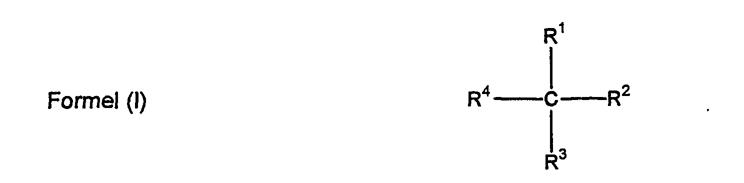 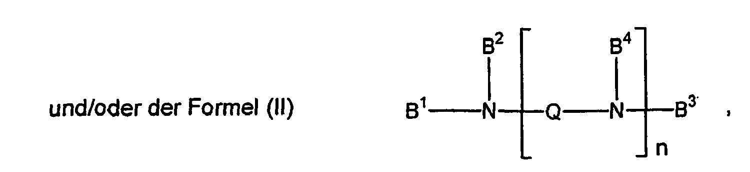
wobei R¹ ein hydrophober Rest der Bedeutung -X-Y-Z oder -Z ist, in welchem
X =

-(CH₂)_{n"}-,

Y = 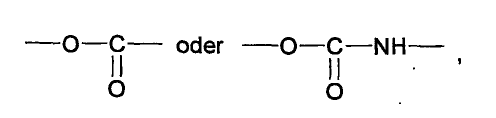
Z =

-(CH₂)_{m'}-CH₃ oder -CH₂CH₂(CF₂)ₘ-CF₃

bedeuten,
R² ein Rest der Zusammensetzung 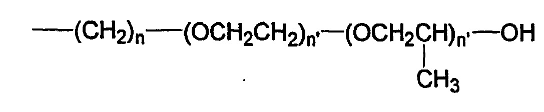 ist,
R³ ein hydrophober Rest der Bedeutung X-Y-Z, -Z oder-Y-Z ist, mit der Maßgabe, dass im Falle der Bedeutung -Y-Z dann im Rest R² n immer durch n" ersetzt ist,
R⁴ ein Rest der Bedeutung -X-Y-Z oder -(CH₂)_{n'}H ist,
B¹ ein hydrophober Rest der Bedeutung -V-W-Z oder -Z ist, in welchem
V= 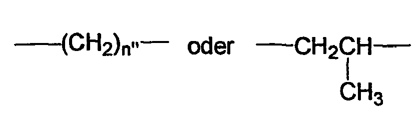 ist,
W= 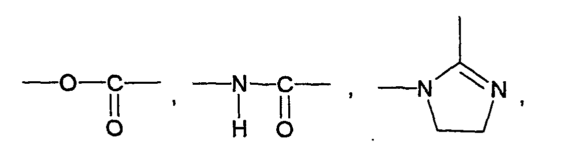 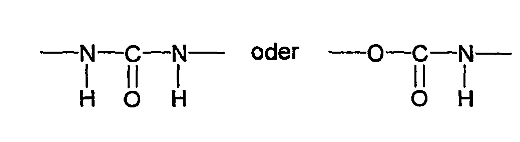 ist,
B² = 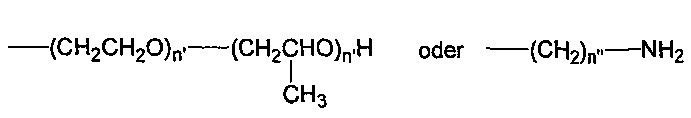 ist,
B³ = ein hydrophober Rest der Bedeutung V-W-Z, Z oder 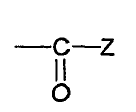 ist,
B⁴ = -V-W-Z oder 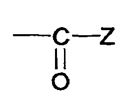 ist und
Q = die Bedeutung -(CH₂)_{n"}- hat,
n, n', n", m und m' ganze Zahlen der Bedeutung

| | |
|---|---|
| n | = 0 - 2, |
| n' | = 0 - 4, |
| n" | = 1 - 4, |
| m | = 3 -11, bevorzugt 5 - 9 und |
| m' | = 12 - 26, bevorzugt 14 - 22 sind, |

mit einem nicht blockierten oder teilblockierten Di-, Tri- oder Polyisocyanat (IC), wobei der Anteil an freien NCO-gruppen zwischen 1,8 und 10 pro Mol Jiegt und das Verhältnis der freien NCO-Gruppen zu den reaktionsfähigen Gruppen der Verbindungen der Formeln (I) und/oder (II) 1 : 1 bis 1 : 1,3 ist,
(3) 0 - 45 % eines nicht blockierten oder blockierten Di-, Tri- oder Polyisocyanates und
(4) gegebenenfalls übliche Emulgatoren.

Sämtliche Prozentangaben der erfindungsgemäßen Zubereitungen beziehen sich auf die Gesamtzusammensetzung der Wirksubstanzen der erfindungsgemäßen Zubereitung und sind Gewichtsprozente. Als bevorzugte Bereiche sind für die Komponente (1) ein Bereich von 20 - 80 %, besonders bevorzugt von 25 - 65%, für die Komponente (2) 20 - 80 %, insbesondere jedoch 30 - 70 % zu nennen. Sofern die Komponente (3) zugesetzt wird, liegt deren Konzentration bevorzugt im Bereich von 1 - 40 %, insbesondere von 5 - 35 %. Die bevorzugte Konzentration der Komponente (4) liegt im Bereich von 4 - 25 %, besonders bevorzugt im Bereich von 7 - 15 %, bezogen auf die Summe der Wirksubstanz der verwendeten Komponenten (1), (2) und (3).

Komponente (1) der Zubereitung besteht aus einer hydrophoben Komponente. Diese Komponente ist ein Wachs und kann aus den üblichen, dem Fachmann hinreichend bekannten Kohlenwasserstoffen der verschiedensten Provenienz bestehen. Es können sowohl natürliche Wachse, wie Bienenwachs oder Carnaubawachs, als auch synthetische Wachse wie Polyethylenwachse und Fischer-Tropsch-Wachse eingesetzt werden. Besonders zu bevorzugen sind jedoch lineare Paraffinwachse, gegebenenfalls mit einem Anteil von 1-5 Gew.-% an kurzkettigen, bei Umgebungstemperatur flüssigen, linearen Kohlenwasserstoffen. Aus dem Stand der Technik sind hinsichtlich der Hydrophobeffekte optimale Schmelzpunkte der verwendeten Paraffine bekannt. So ergeben niedrig schmelzende Paraffine mit einem Schmelzpunkt <50°C deutlich schlechtere Hydrophobwerte als solche mit Schmelzpunkten >60°C. Besonders zu bevorzugen sind deshalb Paraffinwachse mit einem Schmelzbereich von 40 - 70°C, insbesondere jedoch solche mit einem Schmelzbereich von 60 - 70°C.

Die Komponente (2) besteht aus einem hydrophoben Umsetzungsprodukt (S), welches erhältlich ist durch Umsetzen einer anspruchsgemäßen Komponente (A) mit einem anspruchsgemäßen Di-, Tri- oder Polyisocyanat (IC). Die in dieser Komponente (2) als Komponente (A) eingesetzten Verbindungen der Formel (I) bestehen aus Umsetzungsprodukten von mehrwertigen Alkoholen (a1) mit Carbonsäuren (b1) oder mit Alkylisocyanaten (b2). Bevorzugte Beispiele für mehrwertige Alkohole (a1) sind Glyzerin, Trimethylolethan, Trimethylolpropan, 1,2,4-Butantriol, Pentaerythrit oder Zucker, wie zum Beispiel Glucose. Dabei sind Glyzerin, Trimethylolethan, Trimethylolpropan, 1,2,4-Butantriol und Pentaerythrit besonders bevorzugt.

Die in der Komponente (2) als Komponente (A) eingesetzten Verbindungen der Formel (II) bestehen aus Umsetzungsprodukten von Alkanolaminen (a2) und/oder Alkylaminen (a3) mit Carbonsäuren (b1) oder mit Alkylisocyanaten (b2). Beispiele für Alkanolamine (a2) sind 2-Amino-2,3-propandiol, 2-Amino-2-methyl-1,3-propandiol, Diethanolamin, Dipropanolamin, Diisopropanolamin, Ethanolpropanolamin, Triethanolamin, Triisopropanolamin, N,N,N',N'-Tetrakis(2-hydroxypropyl)ethylendiamin, Aminoethylethanolamin, Aminopropylethanolamin, Alkyltris(hydroxyethyl)propylendiamin und Alkyldihydroxyethylamin mit bevorzugt 12-24 Kohlenstoffatomen im Alkylrest, sowie deren Ethoxylierungsprodukte. Dabei sind Diethanolamin, Diisopropanolamin, Triethanolamin, Triisopropanolamin, Aminoethylethanolamin und Aminopropylethanolamin besonders bevorzugt.

Beispiele für Alkylamine (a3) sind Bis(aminoethyl)amin, Bis(aminopropyl)amin und deren polymere Homologe, Aminoethylaminopropylamin, Bis(aminopropyl)ethylendiamin, Tris(aminoethyl)amin, Tris(aminopropyl)amin, Trisaminononan, Aminopropylstearylamin und Aminopropylbisstearylamin. Dabei sind Bis(aminoethyl)amin, Bis(aminopropyl)amin, Aminoethylaminopropylamin, Bis(aminopropyl)ethylendiamin und Aminopropylstearylamin besonders bevorzugt.

Anstelle der unter Verwendung der mehrwertigen Alkohole (a1) oder der Alkanolamine (a2) oder der Alkylamine (a3) sowie der Carbonsäuren (b1) oder der Alkylisocyanate (b2) hergestellten Komponente (A) können zur Umsetzung mit den nicht blockierten oder teilblockierten Di-, Tri- oder Polyisocyanaten (IC) auch Komponenten mit einem aktiven Wasserstoffatom und zwei hydrophoben Resten, wie beispielsweise Guerbet-Alkohole, Bis(dodecyl)amin und bevorzugt Bis(octadecyl)amin eingesetzt werden.

Weiterhin sind bei der genannten Herstellung der Komponente (A) auch Mischungen der genannten Alkohole (a1) mit den Alkanolaminen (a2) und mit den Alkylaminen (a3) einsetzbar.

Die zur Herstellung der Komponente (A) der Formel (I) und (II) verwendeten Carbonsäuren (b1) können gesättigt, linear oder verzweigtkettig mit 9 - 31 Kohlenstoffatomen, bevorzugt mit 11 - 23 Kohlenstoffatomen im Alkylrest sein. Beispiele für die in Formel (I) und (II) verwendeten gesättigten, linearen Carbonsäuren sind Caprin-, Undecan-, Laurin-, Myristin-, Palmitin-, Stearin-, Arachin- und Behensäure. Dabei sind Laurin-, Palmitin-, Stearin- und Behensäure besonders bevorzugt.

In einer speziellen Ausführungsform können lineare, perfluorierte Carbonsäuren mit 6 - 12 Kohlenstoffatomen im perfluorierten Alkylrest eingesetzt werden, sofern zusätzlich zu Hydrophobeigenschaften auch Öl- und Schmutzabweisung auf den appretierten Flächengebilden gewünscht wird.

Die zur Herstellung der Komponente (A) der Formel (I) und (II) verwendeten Alkylisocyanate (b2) sind bevorzugt linear mit 9 - 31, insbesondere mit 12 - 22 Kohlenstoffatomen im Alkylrest, wie beispielsweise Stearylisocyanat.

Für die Umsetzung mit dem nicht blockierten oder teilblockierten Di-, Tri- oder Polyisocyanat (IC) können auch Mischungen beider Verbindungen der Formeln (I) und (II) Verwendung finden.

Sofern Verbindungen der Formeln (I) und (II) kommerziell verfügbar sind, können sie für die genannte Umsetzung direkt eingesetzt werden; eine eigene Herstellung ist daher nicht erforderlich.

Die vorstehend erläuterte Komponente (A) wird mit den anspruchsgemäßen Di-, Tri- oder Polyisocyanaten (IC) zum Produkt (S) umgesetzt. Beispiele für dabei eingesetzte, nicht blockierte oder in teilblockierte Isocyanate zu überführende Di-, Tri- oder Polyisocyanate (IC) werden in der DE-A-100 17 651, Absatz 0032 bis einschließlich 0037 beschrieben.

Besonders bevorzugte Di-, Tri- oder Polyisocyanate (IC) sind beispielsweise 2,4-Toluylendiisocyanat, 2,4'-Diphenylmethandiisocyanat, 4-Methyl-cyclohexan-1,3-diisocyanat, 4,4'-Diphenylmethandiisocyanat, die Mischungen aus monomeren Diphenylmethandiisocyanaten und höherkettigen Homologen des Diphenylmethandiisocyanates (Polymer-MDI), Tetramethylendiisocyanat, Tetramethylendiisocyanat-Trimere, Hexamethylendiisocyanat, Hexamethylendiisocyanat-Trimere, Isophorondiisocyanat, Isophorondiisocyanat-Trimere, 2,2,4-oder 2,4,4-Trimethyl-1,6-hexamethylendiisocyanat und Dimerdiisocyanat. Dimerdiisocyanat ist erhältlich von der Firma Cognis Corp., 300 Brookside Avenue, Ambler, PA 19002, USA, unter der Bezeichnung DDI 1410.

Die Herstellung cyclisierter Oligo- oder Polyisocyanate kann nach den bekannten Methoden der Cyclisierung gemäß W. Siefken (Liebigs Annalen der Chemie 562, Jahrgang 1949, Seiten 75 -136) erfolgen, wobei die Oligo- oder Polyisocyanate offenkettig oder cyctisch vorliegen können. Derartige Verbindungen können aus den genannten Di-, Tri- und Polyisocyanaten durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminoxadiazindion-Strukturen hergestellt werden. Bevorzugt werden Hexamethylendiisocyanat-Trimere, Diphenylmethandiisocyanat-Trimere und Urethane aus 2,4-Toluylendiisocyanat verwendet, welche noch über freie NCO-Gruppen verfügen.

Es ist auch möglich, Teilmengen der Isocyanatgruppen mit Polyalkoxymonoalkylethern unter Zuhilfenahme entsprechender Katalysatorsysteme zu Urethanen umzusetzen, um die Emulgierbarkeit der Komponente (2) in Wasser zu verbessern. Es können hierbei Polyethylenglykolmonomethylether mit 4-20 Ethylenoxideinheiten, optional mit zusätzlichen 2-6 Propylenoxydeinheiten Verwendung finden. Als Katalysatoren können die dem Fachmann bekannten Systeme auf Basis tertiärer Amine und/oder zinnorganischen Verbindungen, wie beispielsweise Dibutylzinndilaurat, Dioctylzinndilaurat oder -diacetat verwendet werden.

Alternativ zu den mittels Polyalkoxymonoalkylethern modifizierten Isocyanaten können tertiäre Alkanolamine als Zusatzstoffe Verwendung finden, um die kationische Ladung der Umsetzungsprodukte (S) und damit die selbstemulgierenden Eigenschaften ohne Beeinträchtigung der Gesamteigenschaften zu verbessern. Bevorzugt geeignet ist hierbei Dimethylaminoethanol.

Sofern für die Umsetzung zur Komponente (2) teilblockierte Di-, Tri- oder Polyisocyanate (IC) Verwendung finden, können diese mit den üblichen und bekannten Blockierungsmitteln teilblockiert sein, wie sie beispielsweise in der DE-A-100 17 651, Absatz 0042 beschrieben sind. Bevorzugt werden Natriumbisulfit oder Methylethylketoxim, insbesondere jedoch 3,5-Dimethylpyrazol für die Teilblockierung verwendet.

Die Teilblockierung erfolgt durch Umsetzung der zu blockierenden Di-, Tri- oder Polyisocyanate (IC) mit dem Blockierungsmittel in der Schmelze oder in einem gegenüber Isocyanaten im wesentlichen inerten organischen Lösemittel (LM), vorzugsweise unter einer Schutzgasatmosphäre und in Gegenwart eines geeigneten Katalysators, wie es beispielsweise in der europäischen Patentschrift EP 0 159 117 B1 oder der deutschen Patentschrift DE 44 41 418 A1 beschrieben wird. Das Verhältnis der freien NCO-Gruppen der zu blockierenden Di-, Tri- oder Polyisocyanate (IC) zu den reaktiven Gruppen des Blockierungsmittels liegt vorzugsweise in einem stöchiometrischen Überschuss bis zu 2 : 1, bevorzugt bis zu 3 : 1.

Als geeignete, inerte organische Lösemittel (LM) werden bevorzugt wasserfreie Ester, wie beispielsweise Ethylacetat, n-Propylacetat, i-Propylacetat, n-Butylacetat, i-Butylacetat oder Amylacetat verwendet.

Der Zusatz der Komponente (3) ist optional. Verbindungen dieses Typs werden als Booster bezeichnet und sie bewirken auf den behandelten Flächengebilden eine Verbesserung der Wasserabweisung. Gleichzeitig wird aufgrund der Polyfunktionalität des Polyisocyanates eine Vernetzung mit den auf den meisten Substraten immer vorhandenen -OH, -COOH oder -NH₂-Gruppen und nicht umgesetzten Funktionen der Komponente (2) bewirkt, wodurch die Beständigkeit gegenüber Waschprozessen deutlich verbessert und die Resistenz gegenüber Abrasion erhöht wird.

Die Komponente (3) kann sowohl in nicht blockierter als auch in blockierter Form zur Verwendung gelangen. Die nicht blockierten Formen der Komponente (3) werden vorwiegend bei Anwendungen aus unpolaren Medien eingesetzt, weil hierbei eine unerwünschte, vorzeitige Umsetzung der freien NCO-Gruppen mit den reaktionsfähigen aktiven Wasserstoffatomen des Anwendungsmediums vermieden wird.

Die zur Herstellung der Komponente (3) geeigneten, nicht blockierten Di-, Tri- oder Polyisocyanate sowie die cyclisierten Oligo- oder Polyisocyanate sind bereits bei der Herstellung des Umsetzungsproduktes (S) in Komponente (2) beschrieben.

Sofern die Komponente (3) aus Anwendungsmedien auf Flächengebilde appliziert werden soll, welche aktive Wasserstoffatome tragen, ist häufig ein Schutz der reaktionsfähigen NCO-Gruppen durch Blockierung mit geeigneten Blockierungsmitteln notwendig. In diesen Fällen erfolgt die Herstellung der Komponente (3) durch Verfahren, bei welchen die vollständige Blockierung der freien NCO-Gruppen von Di-, Tri- oder Polyisocyanaten mit einem Blockierungsagens und gegebenenfalls in einem organischen Lösemittel durchgeführt wird. Um eine vollständige Blockierung zu erzielen, wird üblicherweise ein geringer stöchiometrischer Überschuss an Blockierungsagens eingesetzt. Sofern Produkte für wässrige Anwendungen herzustellen sind, müssen die blockierten Di-, Tri- oder Polyisocyanate, gegebenenfalls gelöst in organischem Lösemittel, unter Verwendung geeigneter Emulgatoren (= Komponente (4)) in Emulsionsform übergeführt werden.

Beispiele für geeignete übliche und bekannte Blockierungsmittel sind aus der DE-A-1 00 17 651, Absatz 0042 bekannt und bereits in der Beschreibung der Herstellung des Umsetzungsproduktes (S) in Komponente (2) beschrieben.

In einer besonderen Ausführungsform können als Booster auch nicht blockierte Di-, Tri- oder Polyisocyanate eingesetzt werden, deren Selbstemulgierfähigkeit in Wasser durch partielle Umsetzung der Isocyanatgruppen mit Polyalkoxymonoalkylethern unter Zuhilfenahme entsprechender Katalysatorsysteme zu Urethanen verbessert wird. Durch die Anknüpfung von hydrophilen Seitenketten an die Di-, Tri- oder Polyisocyanate wird der HLB-Wert des so hergestellten Urethanes so günstig verändert, dass die an sich wasserunlösliche Verbindung selbstemulgierende Eigenschaften bekommt. Bei den hydrophilen Seitenketten ist eine gewisse Selektion von Art und Menge des Restes vorteilhaft. Bevorzugt gelangen zwischen 4 und 20 Ethylenoxidreste zur Verwendung, optional gemeinsam mit 2 - 6 Propylenoxidresten, wobei diese auch in Blöcken innerhalb der Alkoxykette vorliegen können. Bei solchen gemischt alkoxylierten Seitenketten überwiegt jedoch der Mengenanteil an Ethylenoxyd immer denjenigen des Propylenoxyds. Als Katalysatoren für die Urethansynthese können die dem Fachmann bekannten Systeme auf Basis tertiärer Amine und/oder zinnorganischen Verbindungen, wie beispielsweise Dibutylzinndilaurat, Dioctylzinndilaurat oder -diacetat verwendet werden.

Bei der Anwendung bilden die so hergestellten Urethane beim Eintrag in Wasser spontan feinteilige Emulsionen mit hoher Stabilität gegenüber Scherkräften und guter Verträglichkeit mit den anderen Komponenten einer Applikationsflotte. Wegen der Reaktivität der restlichen, nicht umgesetzten NCO-Gruppen mit Wasser sind bei diesen Spezialformen in der Applikationsflotte nur begrenzte Topfzeiten bis maximal 8 Stunden möglich.

Der Zusatz der Komponente (3) wird insbesondere in Fällen vorgenommen, wo besonders hohe Anforderungen an die Waschbeständigkeiten der behandelten Flächengebilde gestellt werden. Vorzugsweise werden dann 5 - 25 % dieser Verbindung eingesetzt, welche für die Anwendung aus lösemittelhaltigen, wasserfreien Medien direkt und ohne Formulierungshilfsmittel eingesetzt werden kann. Sofern die Applikation aus wässrigem Medium erfolgt, gelangen vorzugsweise Emulsionen der Komponente (3) mit 15 - 35 % Feststoffanteil zum Einsatz, welche unter Verwendung von Emulgatoren (= Komponente (4)) auf Basis ethoxylierter Fettamine, optional in quaternärer Form vorliegend, und gegebenenfalls anderen Emulgierhilfsmitteln, wie beispielsweise Solubilisierungsmitteln auf Basis Ethylenglykol, Propylenglykol, Dipropylenglykol, Dipropylenglykolmonomethylether, Mono- oder Diethylenglykolmonobutylether oder N-Methypyrrolidon hergestellt werden. Die Emulgierung kann dabei unter Zuhilfenahme von Hochdruckhomogenisiermaschinen erfolgen.

Wenn die erfindungsgemäßen Zubereitungen (Z) auf wässriger Basis vorliegen, werden Emulgatoren (= Komponente (4)) eingesetzt. Die für die Formulierung der Komponenten (1), (2) und gegebenenfalls (3) der erfindungsgemäßen Zubereitungen eingesetzten Emulgatoren (= Komponente (4)) sind bekannt. Als Emulgatoren kommen beispielsweise Ethoxylierungsprodukte von Fettsäuren, Fettsäureamiden, Fettalkoholen, Fettaminen, letztere auch in Form ihrer Salze mit niedermolekularen organischen Säuren oder Mineralsäuren sowie quaternäre Ammoniumverbindungen, wie beispielsweise Cetylbenzyldimethylammoniumchlorid und vorzugsweise ethoxyliertes Octadecylmethylammoniumchlorid in Frage. Solche Emulgatoren sind beispielsweise im "Römpp Lexikon Chemie" (10.Auflage, 2. Band, Seite 1149 und 1150) beschrieben.

Die üblichen Anwendungsmengen der Emulgatoren liegen vorzugsweise zwischen 4 und 25 Gew.-%, bezogen auf die Summe der Wirksubstanz der Komponenten (1), (2) und gegebenenfalls (3).

Zur Herstellung der Emulsionen werden die bekannten Methoden zur Bildung von Sekundäremulsionen angewendet. Üblicherweise liegt die Emulgiertemperatur oberhalb des Schmelzbereiches der Wirksubstanzen der verwendeten Komponenten (1), (2) und gegebenenfalls (3), vorzugsweise zwischen 50 und 80°C. Um möglichst feinteilige, besonders stabile Emulsionen zu erzeugen, wird häufig zunächst eine grobteilige Voremulsion hergestellt, deren Partikel anschließend unter Zuhilfenahme von Hochdruckhomogenisatoren auf die notwendige durchschnittliche Teilchengröße zwischen 0,1 und 10 Mikrometer verkleinert werden.

Sofern gewünscht, können die als Reaktionsmedium zur Herstellung der Komponenten (2) und gegebenenfalls (3) zugefügten inerten organischen Lösemittel (LM), wie beispielsweise Ethylacetat, n-Propylacetat, i-Propylacetat, n-Butylacetat, i-Butylacetat oder Amylacetat nach der Emulgierung zur Vermeidung emittierfähiger organischer Kohlenwasserstoffe destillativ entfernt werden.

Weiterer Gegenstand der Erfindung ist die Anwendung der erfindungsgemäßen Zubereitungen gemäß Anspruch 1 als Appretur auf Flächengebilden. Als solche werden für den textilen Anwendungsbereich beispielsweise Gewebe, Gewirke und vorverfestigte Faservliesé (Nonwovens) aus nativen Fasern, wie Wolle oder Baumwolle bzw. Synthetikfasern, insbesondere PES-, PA- und Regeneratfasem oder deren Mischungen verwendet.

Der Auftrag auf die textilen Flächengebilde erfolgt im Allgemeinen mit Auflagen von 1-5 Gew.-%, vorzugsweise jedoch 3-5 Gew.% der Festsubstanz der erfindungsgemäßen Zubereitung bezogen auf das Gewicht des zu behandelnden Flächengebildes. Üblicherweise wird eine Flotte in der gewünschten Konzentration mittels einer Zwangsapplikation aus wässrigem Medium auf dem Foulard mit Flottenaufnahmen von 40 -100 %, anschließender Vortrocknung bei 80 -110°C und einer nachfolgenden Heißbehandlung bei 130-170°C während 1-5 Minuten vorgenommen. Die Dauer der Hitzebehandlung ist jeweils abhängig von den angewandten Temperaturen.

Eine weitere Auftragsmöglichkeit auf textile Flächengebilde ist durch das dem Fachmann bekannte Ausziehverfahren gegeben.

Bei der Anwendung auf textilen Flächengebilden können die erfindungsgemäßen Zubereitungen auch mit den in der Textilindustrie üblichen Textilhilfsmitteln kombiniert werden. Hervorzuheben sind Mittel, welche die Entknitterungseigenschaften verbessern, beispielsweise Methylolverbindungen des Dihydroxyethylenharnstoffes oder Methylolmelaminether unterschiedlichen Methylolierungsgrades. Ferner kommen als Textilhilfsmittel solche in Betracht, welche die Flammfestigkeit verbessern oder dem Flächengebilde einen bevorzugten Griff verleihen. Der Warengriff kann jedoch durch günstige Kombination der Komponenten (1) bis (3) in der gewünschten Richtung gesteuert werden, weshalb in diesen Fällen auf weitere Textilhilfsmittel verzichtet werden kann.

Sofern auf den behandelten Flächengebilden neben guten hydrophoben Eigenschaften auch eine Öl- und Schmutzabweisung gewünscht wird, können den Anwendungsflotten als Textilhilfsmittel FC-Polymere zugesetzt werden.

Die Flächengebilde können auch aus Papier bestehen, welches nach den bekannten Papiermachermethoden und aus allen in diesem Anwendungsbereich üblichen Grundstoffen hergestellt sein kann. Die erfindungsgemäßen Zubereitungen können dabei entweder als Zusatz zur Papiermasse oder durch Auftrag auf die Oberfläche des maschinenglatten Papiers mittels Streichanlagen unter Anwendung von Walzen-, Rakel- oder Luftbürstenstreichverfahren und anschließender Infrarot-, Heißluft- oder Zylindertrocknung angewendet werden.

Flächengebilde aus Leder sind ebenfalls gut für die Appretur mit den erfindungsgemäßen Zubereitungen geeignet. Sofern die Anwendung in den der Gerberei nachgeschalteten Zurichtungsprozessen erfolgt, kann dies mit den bekannten Auftragsverfahren oder durch Sprühen oder Tränken erfolgen.

Die Behandlung anderer Flächengebilde ist ebenfalls möglich. So können mineralische Flächengebilde, wie z.B. nicht lasierte Fliesen, Keramikteile oder auch Wandflächen durch Tränken mit der erfindungsgemäßen Appreturflotte hervorragende Wasserabweisung erhalten.

Die Behandlung der Flächengebilde kann durch verschieden Methoden erfolgen, z. B. durch Applikation einer Flotte der erfindungsgemäßen Zubereitung mittels Sprühen, Pflatschen, Pinsel- oder-Schwammauftrag, gegebenenfalls auch in Schaumform. Im Allgemeinen werden Auflagen von 1-5 Gew.%, vorzugsweise jedoch 3-5 Gew.% der Festsubstanz der erfindungsgemäßen Zubereitung bezogen auf das Gewicht des zu behandelnden Flächengebildes verwendet.

Weiterer Gegenstand der Erfindung ist die Anwendung der erfindungsgemäßen Zubereitungen gemäß Anspruch 3 auf textilen Substraten, wobei die Appretur als Nachbehandlung gewaschener Textilien erfolgt.

Viele konfektionierte Artikel werden entweder im häuslichen Bereich auf Haushaltswaschmaschinen oder auf Industriewaschmaschinen gewaschen. Letzteres trifft in hohem Ausmaß auf die Berufsbekleidung von Mitgliedern der Feuerwehr, Polizei, Militär und anderen Berufszweigen zu, welche sich häufig im Freien aufhalten müssen und damit der Witterung ausgesetzt sind. Die üblicherweise öl-, wasser- und schmutzabweisend appretierten Kleidungsstücke erleiden durch die Wäsche einen Verlust dieser Eigenschaften. Häufig werden daher durch eine Nachbehandlung mit Phobiermitteln diese Eigenschaften wieder aufgefrischt und revitalisiert. Die erfindungsgemäßen Zubereitungen können für diese Anwendung Einsatz finden.

Die revitalisierende Behandlung der industriell gewaschenen, konfektionierten Artikel erfolgt in der Wasch- bzw. Schleudertrommel durch Aufgießen einer Flotte der erfindungsgemäßen Zubereitungen auf die schleuderfeuchten Waschartikel und anschließendes Trocknen im Tumbler. Bei Haushaltswaschmaschinen kann die Appretur mittels des üblichen Nachbehandlungsspülganges oder eines Dosierkugelsystems erfolgen.

Weiterer Gegenstand der Erfindung ist die Anwendung der erfindungsgemäßen Zubereitungen als Appretur auf Flächengebilden mit der Maßgabe, dass die Anwendung aus organischen Lösemitteln im Tränk- oder Tauchverfahren erfolgt.

Viele Kleidungsstücke werden nicht gewaschen, sondern einer Reinigung in organischen Lösemitteln unterzogen. Ähnlich wie bei der Nachbehandlung gewaschener Artikel können auch hier durch Auffrischen mit Produkten auf Basis der erfindungsgemäßen Zubereitungen die hydrophoben Eigenschaften revitalisiert werden.

Die revitalisierende Behandlung der in organischen Lösemitteln gereinigten, konfektionierten Artikel erfolgt in der Reinigungstrommel der Chemischreinigungsmaschinen durch Aufgießen oder Aufsprühen einer Flotte der erfindungsgemäßen Zubereitungen auf die schleuderfeuchten, gereinigten Artikel und anschließendes Entfernen der Lösemittel im Tumbler bei erhöhten Temperaturen. Dabei ist der chemische Charakter des reinigenden Agens unerheblich, d.h. die Behandlung kann sowohl auf modernen Maschinen in geschlossenen Systemen mit Perchlorethylen erfolgen oder auf solchen, welche für die Behandlung mit Lösemitteln auf Kohlenwasserstoffbasis, wie beispielsweise Isopar J geeignet sind.

Weiterer Gegenstand der Erfindung ist die Anwendung der erfindungsgemäßen Zubereitungen als Appretur auf Flächengebilden mit der Maßgabe, dass die Anwendung aus organischen Lösemitteln mittels Sprühmethoden erfolgt.

Anstelle einer revitalisierenden Behandlung textiler Flächengebilde nach Wasch- oder Reinigungsprozessen durch Auftrag der erfindungsgemäßen Zubereitungen aus kontinuierlichen, wässrigen- oder lösemittelhaltigen Flotten kann für die Anwendung im häuslichen Bereich (Consumer Care Bereich) die Applikation der erfindungsgemäßen Zubereitungen auch mittels diverser Sprühmethoden vorgenommen werden. Hierfür werden Phobiermittel, formuliert in organischen Lösemitteln und Treibgasen aus Sprühdosen oder durch Pumpmechanismen angeboten. Insbesondere für den Schuhpflegebereich ist erhebliche Verbesserung der Wasserabweisung und damit des Tragekomforts zu erzielen.

Die nachfolgenden Beispiele erläutern die Erfindung. Die Applikation der Appreturen auf textilen Flächengebilden erfolgte auf einem Laborfoulard der Type LFV 350/2 "RFA" (Fa. Benz, Schweiz) mit nachfolgender Trocknung und Heißbehandlung auf einem Laborspannrahmen der Type TKF 15/M 350 (Fa. Benz, Schweiz). Sofern Sprühapplikation durchgeführt wurde, erfolgte dies im geschlossenen Abzug durch manuellen und einseitigen Auftrag mittels Pumpspray auf das aufgespannte Flächengebilde mit anschließender Trocknung bei Raumtemperatur während 24 Stunden. Die Bestimmung der Flottenaufnahme erfolgte durch Auswiegen der appretierten Testmuster vor und nach der Applikation.

Die Prüfung der hydrophoben und gegebenenfalls oleophoben Effekte erfolgte nicht unmittelbar nach der Applikation, sondern erst nach einer Konditionierung der Substrate im Normklima während 24 Stunden, um Einflüsse auf diese Eigenschaften durch Übertrocknung zu nivellieren. Auflagemengen sowie die Bedingungen der Heißbehandlung sind gemeinsam mit den zu erzielenden Phobiereffekten in den Tabellen 3a und 3b aufgeführt.

Die Wasserabweisung wurde auf den textilen Flächengebilden sowohl mittels Spraytest gemäß AATCC Standard Test Method 22 als auch mittels des wesentlich stärker differenzierenden "Bundesmanntests" gemäß DIN 53 888 getestet. Die Prüfung gemäß AATCC Standard Test Method 22 erfolgt durch Aufsprühen von destilliertem Wasser unter kontrollierten Bedingungen auf das zu testende textile Substrat und anschließenden visuellen Vergleich des Benetzungsmusters zu Bildern eines in der Testmethode aufgeführten Beurteilungsstandards. Die angegebenen Zahlenwerte beziehen sich dabei auf das Erscheinungsbild der Oberfläche nach dem Aufsprühen des Wassers und haben folgende Bedeutung:

| | |
|---|---|
| 100 = | Kein Anhaften von Wassertropfen oder Benetzung der oberen Oberfläche |
| 90 = | Vereinzeltes Anhaften von Wassertropfen oder Benetzung der oberen Oberfläche |
| 80 = | Benetzung der oberen Oberfläche an den Auftreffpunkten des Wassers |
| 70 = | Teilweise Benetzung der ganzen oberen Oberfläche |
| 50 = | Vollständige Benetzung der ganzen oberen Oberfläche |
| 0 = | Vollständige Benetzung der ganzen oberen und unteren Oberfläche (Durchnetzung). |

Beim wesentlich stärker differenzierenden "Bundesmanntest" gemäß DIN 53 888 wird das zu testende textile Substrat der Einwirkung eines definierten künstlichen Regens ausgesetzt und die nach einer bestimmtem Dauer aufgenommene Wassermenge in Prozent bestimmt und ist in den Tabellen 3a und 3b als "Wasseraufnahme" gekennzeichnet. Weiterhin wird der in Tabellen 3a und 3b als "Abperleffekt" gekennzeichnete Wasser-Abperleffekt zur Beurteilung herangezogen. Dieser wird durch visuellen Vergleich der beregneten Testmuster mit in der DIN-Vorschrift aufgeführten Bildern nach 5 Noten beurteilt, die wie folgt gekennzeichnet sind:

| | |
|---|---|
| Note 5 = | Kleine Tropfen perlen lebhaft ab |
| Note 4 = | Ausbildung größerer Tropfen |
| Note 3 = | Tropfen bleiben stellenweise auf der Messprobe hängen |
| Note 2 = | Messprobe teilweise angenetzt |
| Note 1 = | Messprobe auf der gesamten Fläche an- bzw. durchgenetzt. |

Sofern in den Anwendungsflotten für textile Substrate auch FC-Polymere Verwendung fanden, wurde die Ölabweisung gemäß AATCC Standard Test Method 118 geprüft. Dabei wird die Fähigkeit des textilen Substrates beurteilt, der Benetzung durch flüssige Kohlenwasserstoffe mit unterschiedlichen Oberflächenspannungen zu widerstehen. Der Test liefert einen groben Index der Fähigkeit eines Substrates, ölige Verschmutzungen abzuweisen, wobei in der Bewertungsskala die höheren Benotungen eine bessere Abweisung solcher Verschmutzungen, insbesondere gegen ölige Flüssigkeiten bedeuten. Bei dem Test werden Tropfen von standardisierten Testflüssigkeiten, bestehend aus einer ausgewählten Serie von Kohlenwasserstoffen mit unterschiedlichen Oberflächenspannungen nacheinander auf die Oberfläche des zu testenden Prüfmusters durch vorsichtiges Auftropfen appliziert und die Benetzung nach definierter Kontaktzeit visuell beurteilt. Der Ölabweisungswert entspricht der Testflüssigkeit mit der höchsten Nummer, durch welche keine Benetzung der Oberfläche verursacht wird. Die Standard-Testflüssigkeiten haben folgende Zusammensetzung:

| Ölabweisung | Zusammensetzung |
|---|---|
| Note 1 = | "Nujol" |
| Note 2 = | 65 Vol.% "Nujol" zu 35 Vol.-% n-Hexadecan |
| Note 3 = | n-Hexadecan |
| Note 4 = | n-Tetradecan |
| Note 5 = | n-Dodecan |
| Note 6 = | n-Decan |
| Note 7 = | n-Octan |
| Note 8 = | n-Heptan. |

Mit FC-Polymeren des Stands der Technik werden zum gegenwärtigen Zeitpunkt Ölabweisungswerte von 6 erreicht; die Note 5 wird jedoch üblicherweise schon als ausgezeichneter Wert betrachtet.

Um die Beständigkeit der appretierten Flächengebilde gegenüber Waschprozessen zu prüfen, wurden die Testmuster gemäß EN ISO 6330:2000 bei 60°C gewaschen und getrocknet.

### Vergleichsbeispiel

Die Herstellung der in Tabelle 2 aufgeführten Vergleichsemulsion (Zubereitung (Z) 1) erfolgt gemäß DBP 1 017 133, Beispiel 1.

### Beispiele zur Herstellung der Komponente (2)

### Komponente (A):

### Allgemeine Herstellungsvorschrift für Komponenten (A) der Formel (I) und/oder (II)

In einem geeignet dimensionierten Dreihalskolben, ausgestattet mit Destillationskühler, regelbarem Rührer und Innenthermometer werden die in Tabelle 1 angegebenen Komponenten (a1, a2 oder a3) und (b1) in den dort angegebenen Mengen in Gramm unter Schutzgas und Rühren aufgeschmolzen. Anschließend wird das Gemisch auf die in Tabelle 1 angegebene Endtemperatur (T) aufgeheizt und solange weitergerührt bis kein Reaktionswasser mehr abdestilliert und die in Tabelle 1 genannte Säurezahl (SZ) erreicht ist. Bedarfsweise kann bei den Veresterungsreaktionen 0,1 % Schwefelsäure als Katalysator zugesetzt werden. Bei den Amidierungsreaktionen ist kein Zusatz von Katalysator notwendig. Das resultierende Kondensationsprodukt wird ausgegossen und nach dem Abkühlen zu Schuppen verarbeitet.

### Komponente (A):

### Besondere Herstellungsvorschrift für Komponenten (A) der Formel (I) und/oder (II) unter Verwendung von Alkylisocyanaten (b2) und Weiterverarbeitung zum Umsetzungsprodukte (S)

In einem geeignet dimensionierten Dreihalskolben, ausgestattet mit Rückflußkühler, regelbarem Rührer, Innenthermometer und Tropftrichter werden die in Tabelle 1 angegebenen Komponenten (a1) und (b2) in Gramm in Isopropylacetat (LM) vorgelegt. Anschließend werden, bezogen auf die Gesamtmenge der Komponenten, 0,05 % 1,4-Diazabicylo(2,2,2)octan als Katalysator zugesetzt und die Mischung solange bei 80°C gerührt, bis im IR-spektrum keine NCO-Bande mehr erkennbar ist.
Anschließend wird dem Gemisch zur Herstellung des Umsetzungsproduktes (S) die in Tabelle 1 angegebene Mengen in Gramm von Komponente (IC) zugegeben und solange bei 80°C weitergerührt, bis im IR-spektrum keine NCO-Bande mehr erkennbar ist.

### Umsetzunasprodukte (S) (= Komponente (2)):

### Allgemeine Herstellungsvorschrift für Umsetzungsprodukte (S) aus einer Komponente (A) und nicht blockierten oder tellblockierten Di-, Tri- oder Polyisocyanaten (IC)

In einem geeignet dimensionierten Dreihalskolben, ausgestattet mit Rückflußkühler, regelbarem Rührer, Innenthermometer und Tropftrichter werden die in Tabelle 1 angegebenen Komponenten (A) und die Komponenten (IC) in den dort angegebenen Mengen in Gramm in Isopropylacetat (LM) vorgelegt. Anschließend werden, bezogen auf die Gesamtmenge der Komponenten, 0,05 % 1,4-Diazabicylo(2,2,2)octan als Katalysator zugesetzt und die Mischung solange bei 65°C gerührt, bis im IR-spektrum keine NCO-Bande mehr erkennbar ist.

### Besondere Herstellungsvorschrift für die in den Emulsionen (E) 1 und 2 eingesetzten Umsetzungsprodukte (S)

Zur Herstellung der Emulsionen (E) 1 und 2 gemäß Tabelle 1 werden Umsetzungsprodukte (S) verwendet, bei deren Herstellung (Reaktion der Komponente (A) mit dem Isocyanat (IC)) noch die in der Tabelle 1 angegebenen Menge in Gramm Dimethylaminoethanol zugesetzt werden.

### Emulsionen (E):

### Allgemeine Herstellungsvorschrift für Emulsionen (E) aus Komponente (1) und Komponente (2) bzw. den Umsetzungsprodukten (S)

**Ölige Phase:** In einem geeignet dimensionierten Becherglas werden die in Tabelle 1 angegebenen Mengen in Gramm von Umsetzungsprodukt (S), vorliegend im vorstehend genannten Isopropylacetat und der Komponente (1) vorgelegt und unter Rühren auf 65 - 70°C aufgeheizt, bis sich eine klare, homogene Lösung ergibt. Das zu verwendende Umsetzungsprodukt (S) muss gegebenenfalls vor der Anwendung bei 65 - 70°C aufgeschmolzen werden, um ein homogenes Edukt zu erhalten.
**Wässrige Phase**: In einem geeignet dimensionierten Becherglas werden die in Tabelle 1 angegebenen Mengen in Gramm an Emulgatoren (Em) (= Komponente (4)) in der angegebenen Menge Wasser bei 65°C gelöst.
Unter einem Schnellrührer werden beide Phasen zu einer grobteiligen Voremulsion verrührt und anschließend bei 65°C auf der Hochdruckhomogenisiermaschine bei 300 - 500 bar homogenisiert, bis eine durchschnittliche Teilchengröße zwischen 0,1 und 10 Mikrometer erreicht ist. Anschließend wird das Lösemittel (LM) auf dem Rotationsverdampfer im Vakuum durch azeotrope Destillation entfernt. Gegebenenfalls wird der pH-Wert der erhaltenen Emulsion mit Essigsäure 60%ig auf 5-7 eingestellt, die erhaltene weiße Emulsion über ein Filter mit 20 Mikrometer filtriert und mit Wasser auf einen Feststoffgehalt von 20 % eingestellt.

### Herstellung der erfindungsgemäßen Zubereitungen (Z)

Die in der Tabelle 2 aufgeführten Emulsionen (E), enthaltend die Komponenten (1), (2) und (4) werden gegebenenfalls mit der Komponente (3) und gegebenenfalls Wasser in den angegebenen Gewichtsverhältnissen gemischt, wobei die in der Tabelle 2 genannten Zubereitungen (Z) erhalten werden.

### Appreturbeispiele

### Anwendung von Zubereitungen (Z) auf wässriger Basis auf textilen Flächengebilden :

Ausrüstungskonditionen und Prüfergebnisse sind in den Tabellen 3a und 3b aufgeführt.

### Anwendung von Zubereitungen (Z) auf Lösemittelbasis auf textilen Flächengebilden (in den Tabellen 3a und 3b nicht aufgeführt):

Für diese Anwendung werden 11,5 g (statt 113,8 g) des in Tabelle 1 in der Spalte mit der Nummer 4 aufgeführten Umsetzungsproduktes (S) mit 7,5 g Paraffin 60/62 in 231 g n-Heptan gelöst. Mittels eines Pumpzerstäubers wird die Lösung aus einer Distanz von etwa 30 cm auf die in Tabelle 3a und 3b beschriebenen Baumwoll- und Polyestersubstrate aufgesprüht, bis die Oberflächen einheitlich benetzt sind. Anschließend wird während 24 Stunden bei Raumtemperatur getrocknet. Die behandelten Testgewebe aus Baumwoll-Popeline zeigen eine Wasserabweisung gemäß AATCC Standard Test Method 22 von 90, die Testgewebe aus Polyester eine solche von 100.

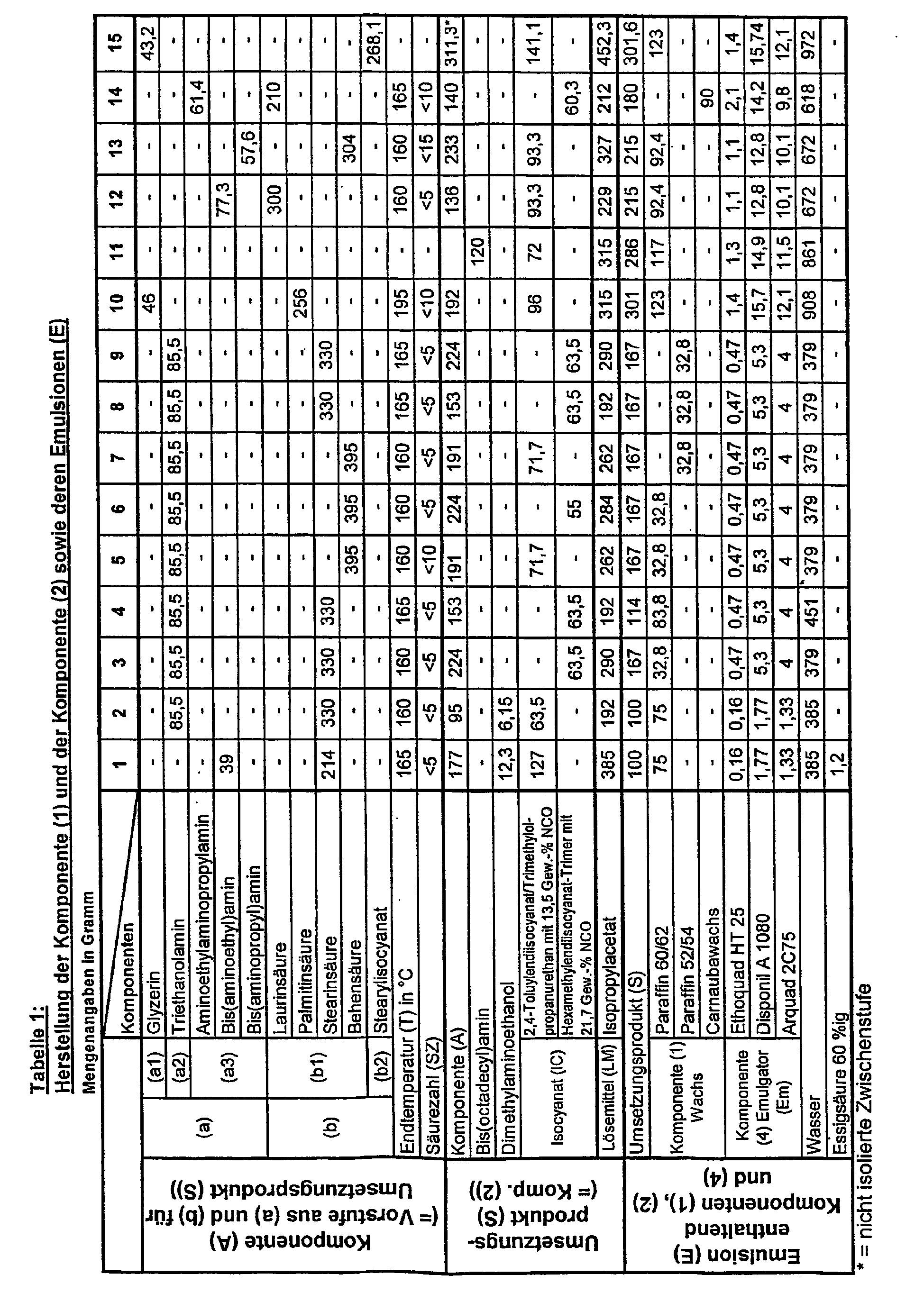

**Tabelle 2: Mischungsverhältnisse der erfindungsgemäßen Zubereitungen (Z)**

| **Gew.Teile Emulsion (E), enthaltend Komponente (1), (2) und (4)** | **Gew.Teile Komponente (3) RUCO-GUARD EPF 1660** | **Gew.Teile Wasser** | **Zubereitung (Z)** |
|---|---|---|---|
| 100 von Vergleichsbeispiel | - | - | 1 |
| 90 von (E) 1 | - | 10 | 2 |
| 90 von (E) 1 | 10 | - | 3 |
| 90 von (E) 2 | - | 10 | 4 |
| 90 von (E) 2 | 10 | - | 5 |
| 90 von (E) 3 | - | 10 | 6 |
| 90 von (E) 3 | 10 | - | 7 |
| 90 von (E) 4 | - | 10 | 8 |
| 90 von (E) 4 | 10 | - | 9 |
| 62 von (E) 4 | 22 | 16 | 10 |
| 85 von (E) 5 | 15 | - | 11 |
| 85 von (E) 6 | 15 | - | 12 |
| 85 von (E) 7 | 15 | - | 13 |
| 85 von (E) 8 | 15 | - | 14 |
| 85 von (E) 9 | 15 | - | 15 |
| 85 von (E) 10 | 15 | - | 16 |
| 85 von (E) 11 | 15 | - | 17 |
| 85 von (E) 12 | 15 | - | 18 |
| 85 von (E) 13 | 15 | - | 19 |
| 85 von (E) 14 | 15 | - | 20 |
| 85 von (E) 15 | 15 | - | 21 |

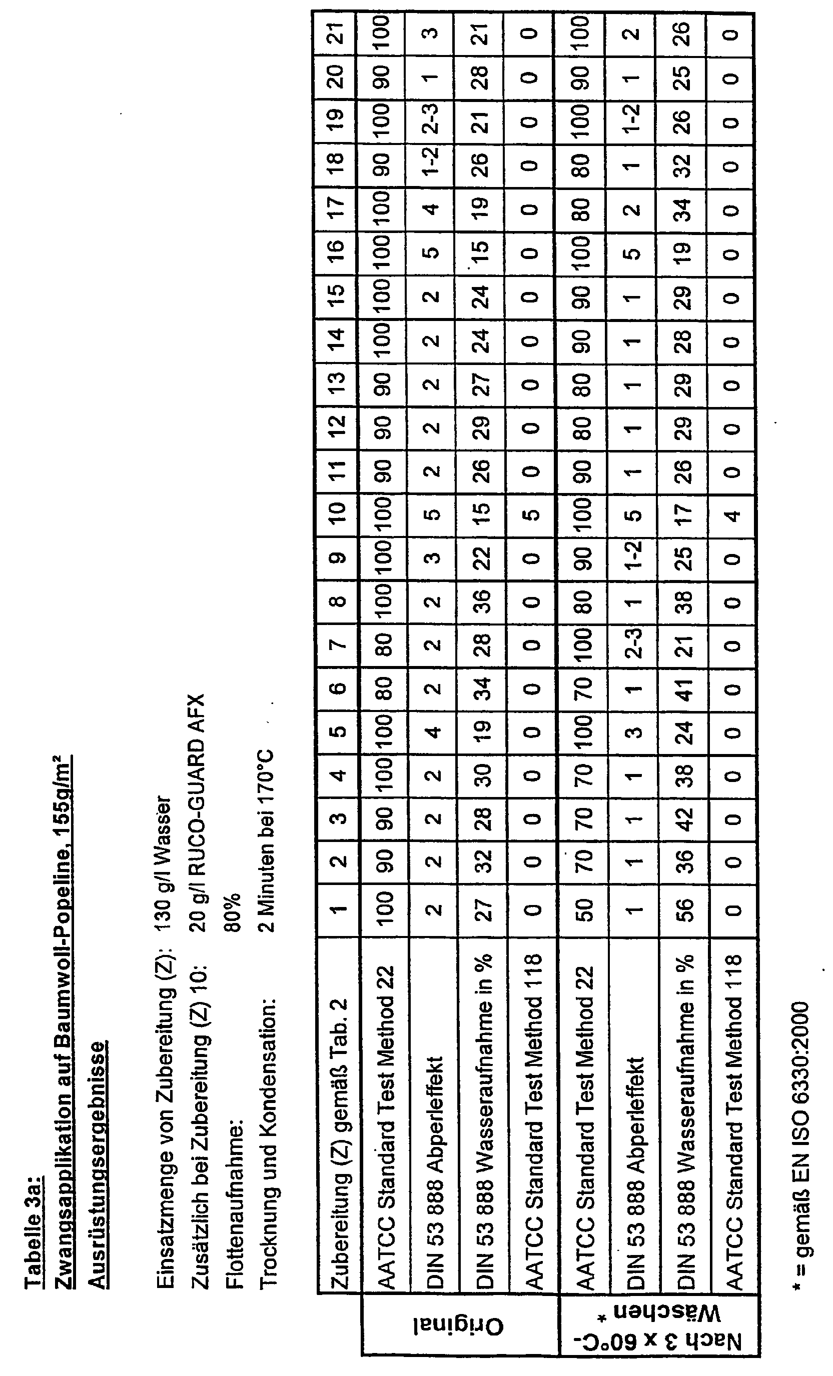

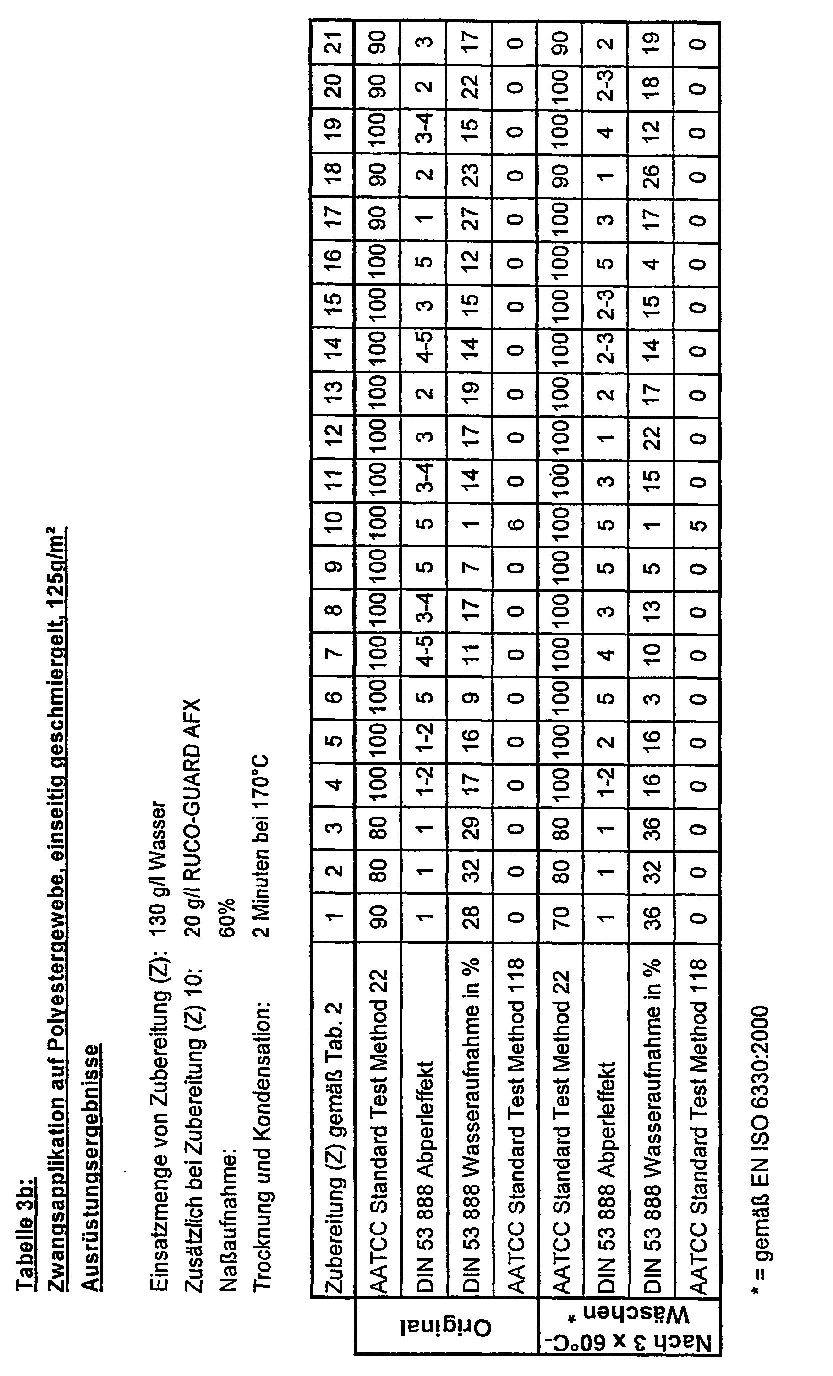

## Patentansprüche

1. Zubereitungen (Z) auf Basis von Wasser und/oder organischen Lösemitteln, **gekennzeichnet durch** den Gehalt folgender Einzelkomponenten:
(1) 10-90% einer hydrophoben Komponente auf Wachsbasis,
(2) 10-90% eines hydrophoben Umsetzungsproduktes (S), erhältlich durch Umsetzen einer Komponente (A) der 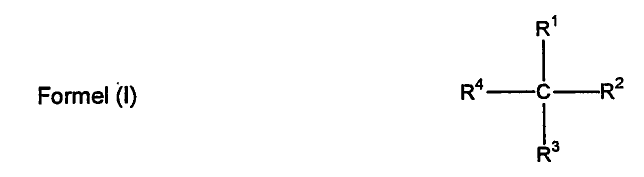 und/oder 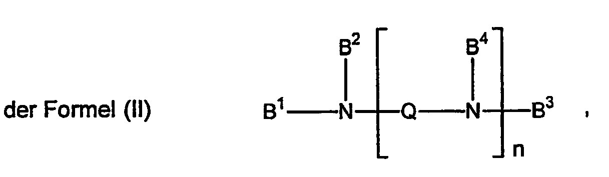 wobei R¹ ein hydrophober Rest der Bedeutung X-Y-Z oder -Z ist, in welchem
X=
-(CH₂)_{n"}- ,
Y= 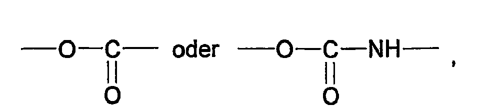
Z =
-(CH₂)_{m'}-CH₃ oder -CH₂CH₂(CF₂)ₘ-CF₃
bedeuten,
R² ein Rest der Zusammensetzung 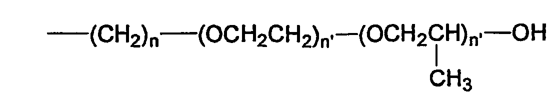 ist,
R³ ein hydrophober Rest der Bedeutung -X-Y-Z, -Z oder -Y-Z ist, mit der Maßgabe, dass im Falle der Bedeutung -Y-Z dann im Rest R² n immer **durch**
n" ersetzt ist,
R⁴ ein Rest der Bedeutung -X-Y-Z oder -(CH₂)_{n'}H ist,
B¹ ein hydrophober Rest der Bedeutung -V-W-Z oder -Z ist, in welchem
V= 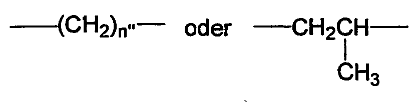 ist,
W= 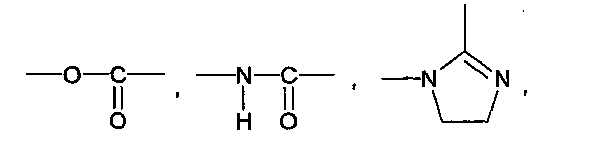 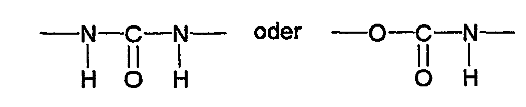 ist,
B² = 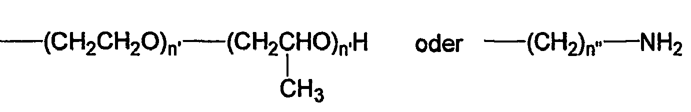 ist,
B³ = ein hydrophober Rest der Bedeutung -V-W-Z, -Z oder 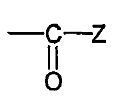 ist,
B⁴ = 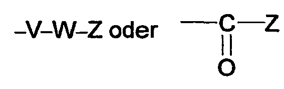 ist und
Q = die Bedeutung -(CH₂)_{n"}- hat,
n, n', n", m und m' ganze Zahlen der Bedeutung
| | |
|---|---|
| n | = 0-2, |
| n' | = 0-4, |
| n" | = 1-4, |
| m | = 3-11 und |
| m' | = 12-26 sind, |
mit einem nicht blockierten oder teilblockierten Di-, Tri- oder Polyisocyanat (IC), wobei der Anteil an freien NCO-gruppen zwischen 1,8 und 10 pro Mol liegt und das Verhältnis der freien NCO-Gruppen zu den reaktionsfähigen Gruppen der Verbindungen der Formeln (I) und/oder (II) 1 : 1 bis 1 : 1,3 ist,
(3) 0-45% eines nicht blockierten oder blockierten Di-, Tri- oder Polyisocyanates und
(4) gegebenenfalls übliche Emulgatoren.

2. Anwendung der Zubereitungen gemäß Anspruch 1 als Appretur auf Flächengebilden.

3. Anwendung der Zubereitungen gemäß Anspruch 2 als Appretur auf textilen Substraten, Papier, Leder und mineralischen Flächengebilde.

4. Anwendung der Zubereitungen gemäß Anspruch 2, wobei der Auftrag mittels Sprühen, durch Pinsel- oder Schwammauftrag erfolgt.

5. Anwendung der Zubereitungen gemäß Anspruch 2, wobei die Anwendung aus organischen Lösemitteln im Tränk- oder Tauchverfahren oder mittels Sprühmethoden erfolgt.

6. Anwendung der Zubereitungen gemäß Anspruch 2, wobei die Anwendung gemeinsam mit Formulierungen von Fluorcarbonpolymeren zur Erzielung ölabweisender Effekte erfolgt.

7. Anwendung der Zubereitungen gemäß Anspruch 3 auf textilen Substraten, wobei die Appretur mittels Zwangsapplikation oder im Ausziehverfahren erfolgt.

8. Anwendung der Zubereitungen gemäß Anspruch 3 auf textilen Substraten, wobei die Appretur als Nachbehandlung gewaschener Textilien erfolgt.

## Claims

1. Preparations (Z) based on water and/or organic solvents, **characterised in that** they contain the following individual components:
(1) 10-90 % of a hydrophobic wax-based component,
(2) 10-90 % of a hydrophobic reaction product (S) obtainable by reacting a component (A) of 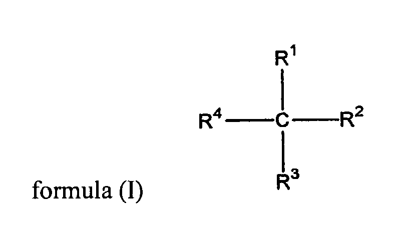 and/or of 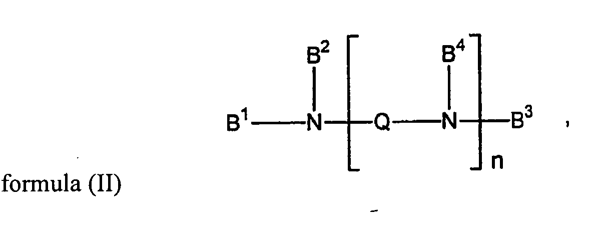 where R¹ is a hydrophobic radical representing -X-Y-Z or -Z, where
X represents
-(CH₂)_{n"}- ,
Y represents 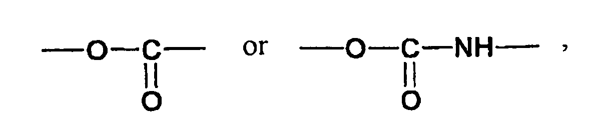
Z represents
-(CH₂)_{m'}-CH₃ or -CH₂CH₂(CF₂)ₘ-CF₃,
R² is a radical of the composition: 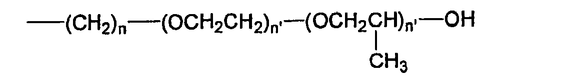
R³ is a hydrophobic radical representing -X-Y-Z, -Z or -Y-Z, where in the case of -Y-Z, n is always replaced by n" in the R² radical,
R⁴ is a radical representing -X-Y-Z or -(CH₂)_{n'}H
B¹ is a hydrophobic radical representing -V-W-Z or -Z, where
V represents
(CH₂)_{n"}-
or 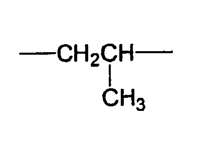
W represents 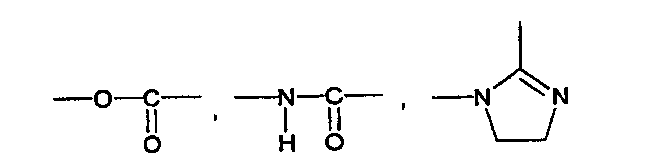 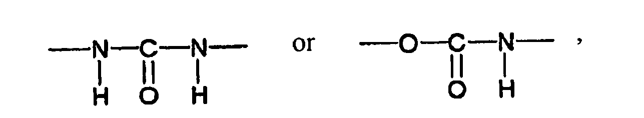
B² represents 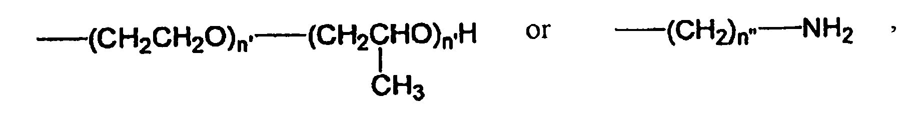
B³ is a hydrophobic radical representing -V-W-Z, -Z 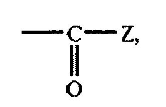 or
B⁴ represents -V- W-Z or 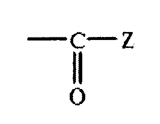 and
Q represents
-(CH₂)_{n"}-
n, n', n", m and m' are integers, where:
n = 0-2,
n' = 0-4,
n" = 1-4,
m = 3-11 and
m' = 12-26,
with an unblocked or partially blocked di-, tri- or polyisocyanate (IC), the fraction of free NCO groups being between 1.8 and 10 per mol and the ratio of the free NCO groups to the reactive groups in the compounds of formulae (I) and/or (II) being between 1:1 and 1:1.3,
(3) 0-45 % of an unblocked or blocked di-, tri- or polyisocyanate, and
(4) optionally, conventional emulsifiers.

2. Use of the preparations according to claim 1 as a finish on sheets.

3. Use of the preparations according to claim 2 as a finish on textile substrates, paper, leather and mineral sheets.

4. Use of the preparations according to claim 2, wherein the application takes place via spraying, brush application or sponge application.

5. Use of the preparations according to claim 2, wherein said use takes place in a drenching or dipping process on the basis of organic solvents or via spraying methods.

6. Use of the preparations according to claim 2, wherein said use takes place in conjunction with formulations of fluorocarbon polymers to achieve oil-repellent effects.

7. Use of the preparations according to claim 3 on textile substrates, wherein finishing is effected via forced application or by an extraction method.

8. Use of the preparations according to claim 3 on textile substrates, wherein finishing is effected as an after-treatment of washed textiles.

## Revendications

1. Préparations (Z) à base d'eau et/ou de solvants organiques, **caractérisée par** la teneur en les composants individuels suivants :
(1) 10 à 90 % d'un composé hydrophobe à base de cire
(2) 10 à 90 % d'un produit de réaction (S), pouvant être obtenu par réaction d'un composant (A) de la 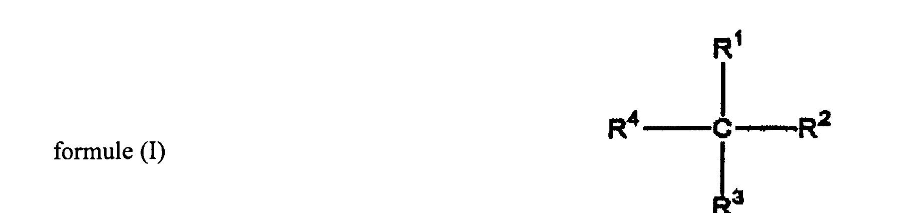 et/ou de la 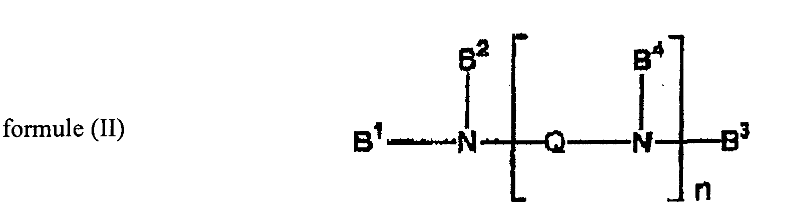 dans laquelle R¹ est un radical hydrophobe de la signification -X-Y-Z ou -Z, dans laquelle
X = signifie -(CH₂)_{n"}-,
| | | | |
|---|---|---|---|
| Y= | 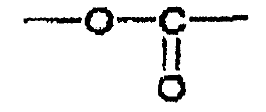 | ou | 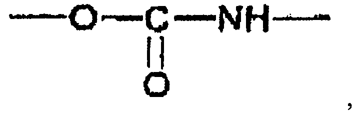 |
Z = -(CH₂)_{m'}-CH₃ ou -CH₂-CH₂(CF₂)ₘ-CF₃,
R² est un radical de la composition 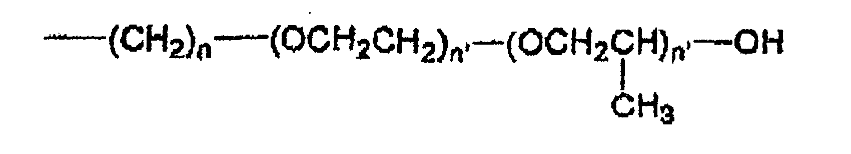
R³ est un radical hydrophobe de la signification -X-Y-Z, -Z ou -Y-Z, avec la spécification que dans le cas de la signification -Y-Z, alors n dans R² est toujours remplacé par n",
R⁴ est un radical de la signification -X-Y-Z ou -(CH₂)_{n'}-H,
B¹ est un radical hydrophobe de la signification -V-W-Z ou -Z, dans lequel
V =
-(CH₂)_{n"}-
ou 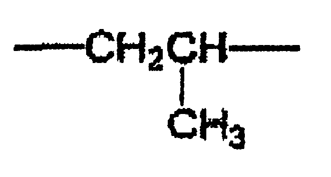
W = 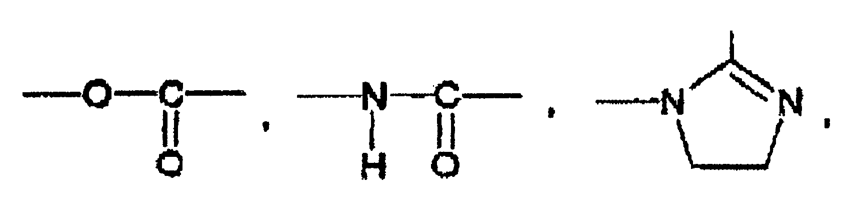 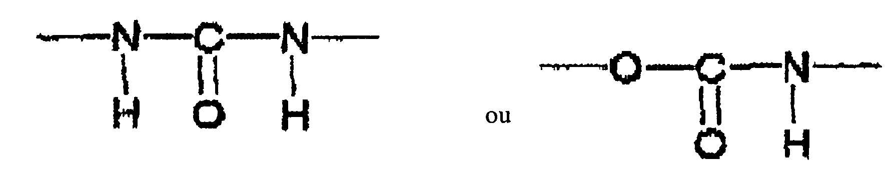
B²= 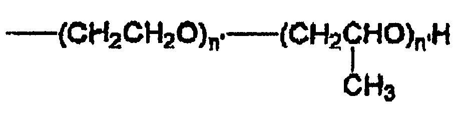 ou
-(CH₂)_{n"}-NH₂
B³ = un radical hydrophobe de la signification -V-W-Z ou 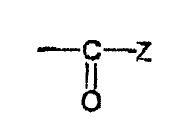
B⁴ = est -V-W-Z ou 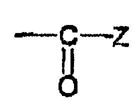 et
Q = a la signification de -(CH₂)_{n"}-
n, n', n", m et m' sont des nombres entiers avec les significations
n = 0 à 2
n' = 0 à 4
n" = 1 à 4
m = 3 à 11 et
m' = 12 à 26,
avec un di-, tri-, ou polyisocyanate (IC) non bloqué ou partiellement bloqué, sachant que la proportion de groupes NCO libres est située entre 1,8 et 10 par mole et le rapport des groupes NCO libres aux groupes réactifs des composés des formules (I) et/ou (II) est de 1 : 1 à 1 : 1,3,
(3) 0 à 45 % d'un di-, tri-, ou polyisocyanate non bloqué ou bloqué et
(4) éventuellement des émulsionnants habituels.

2. Utilisation des préparations selon la revendication 1 comme apprêt sur des produits plats.

3. Utilisation des préparations selon la revendication 2 comme apprêt sur des substrats textiles, du papier, du cuir et des produits plats minéraux.

4. Utilisation des préparations selon la revendication 2, l'application s'effectuant par pulvérisation ou par application avec un pinceau ou une éponge.

5. Utilisation des préparations selon la revendication 2, l'utilisation s'effectuant depuis des solvants organiques dans le procédé d'imbibition ou d'immersion, ou au moyen de méthodes de pulvérisation.

6. Utilisation des préparations selon la revendication 2, l'utilisation s'effectuant ensemble avec des formulations de polymères fluocarbonés pour la production d'effets oléofuges.

7. Utilisation des préparations selon la revendication 3 sur des substrats textiles, l'apprêt s'effectuant par application forcée ou dans le procédé d'étirement.

8. Utilisation des préparations selon la revendication 3 sur des substrats textiles, l'apprêt s'effectuant comme traitement ultérieur de textiles lavés.
